Europäisches Patentamt

European Patent Office

Office européen des brevets

(11) Veröffentlichungsnummer: **0 350 735**
**A1**

## (12) EUROPÄISCHE PATENTANMELDUNG

(21) Anmeldenummer: **89111997.6**

(22) Anmeldetag: **30.06.89**

(51) Int. Cl.4: **B23K 35/30 , B23K 35/32 , C04B 37/00 , C04B 37/02**

(30) Priorität: **11.07.88 CH 2643/88**

(43) Veröffentlichungstag der Anmeldung:
**17.01.90 Patentblatt 90/03**

(84) Benannte Vertragsstaaten:
**AT CH DE ES FR GB IT LI SE**

(71) Anmelder: **LONZA AG**
**Gampel/Wallis Geschäftsleitung Basel**
**CH-4002 Basel(CH)**

(72) Erfinder: **Gampp, Kurt, Dr.**
**Hofmattweg 51**
**CH-Arlesheim (Kanton Baselland)(CH)**
Erfinder: **Heinzen, Georg**
**Gartenstr. 59**
**CH-Muttenz (Kanton Baselland)(CH)**

(74) Vertreter: **von Füner, Alexander, Dr. et al**
**Patentanwälte v. Füner, Ebbinghaus, Finck**
**Mariahilfplatz 2 & 3**
**D-8000 München 90(DE)**

(54) **Cu-Zr-Lötfolie.**

(57) Die Erfindung betrifft eine amorphe oder teilamorphe Cu-Zr-Lötfolie. Diese ist besonders geeignet zum Hartlöten von Keramik mit Keramik oder Keramik mit Metallen.

EP 0 350 735 A1

## Cu-Zr-Lötfolie

Die Erfindung betrifft eine Lötfolie aus einer amorphen oder teilamorphen Kupfer-Zirkonlegierung zum Hartlöten von Keramik mit Keramik oder Keramik mit Metallen.

Für Hochtemperaturanwendungen sowohl von Metallen als auch bei Keramik ist das Hartlöten ein Fügeverfahren mit zunehmender Bedeutung. Der Begriff Hartlöten kann auch durch den Begriff Aktivlöten erklärt werden (Praktische Metallographie, Sonderbände, Stuttgart 18, 1987).

Die gefügten Werkstoffe haben den Vorteil, dass Grundwerkstoffe mit unterschiedlichen Eigenschaften kombiniert werden können. Der Zweck des Fügens von Metall mit Keramik kann beispielsweise ein Verschleissschutz, eine Wärmedämmung, ein Korrosionsschutz, eine elektrische Isolation, eine vakuumdichte Durchführung oder dergleichen sein. Die Fügetechnik durch Hartlöten ist auch für die Verbindung von Keramikteilen, gleicher oder verschiedener chemischer Zusammensetzung, von Bedeutung; insbesondere, wenn komplizierte Körper aus einfach geformten Teilen zusammengefügt werden sollen.

Besonders wichtig für eine dauerhafte Verbindung der Teile ist, dass diese Teile vom Lot gut benetzt werden.

Biegsame Folien sind vielfach einfacher zu handhaben und besser zu dosieren als Pulver oder Pasten.

Wegen ihrer hohen Duktilität, auch bei hohem Anteil an reaktiven Metallen, eignen sich für das Hartlöten besonders amorphe oder teilamorphe Folien, die durch rasches Abschrecken aus der Schmelze erhalten werden.

Diese Folien bestehen aus nur einer, aber sehr homogener Schicht.

Für eine gute Benetzung ist notwendig, dass jede oxidische Verunreinigung an der Oberfläche der Lötmittel vermieden wird, daher wird das Hartlöten mit den erwähnten Folien vorzugsweise im Vakuum oder unter Schutzgas ausgeführt.

Aufgabe der vorliegenden Erfindung ist es, neue Lötfolien aus einer amorphen oder teilamorphen Kupfer-Zirkonlegierung gemäss Patentanspruch 1 aufzuzeigen, die in besonderer Weise geeignet sind, Keramikteile untereinander oder Keramikteile mit Metallteilen zu verbinden.

Die Kupfer-Zirkonlegierung hat erfindungsgemäss eine Zusammensetzung von 20 bis 80 Atom% Kupfer und 20 bis 80 Atom% Zirkon.

Vorteilhaft gelangen Legierungen mit Zusammensetzungen von 65 bis 75 Atom% Kupfer und 25 bis 35 Atom% Zirkon oder 55 bis 65 Atom% Kupfer und 35 bis 45 Atom% Zirkon oder 30 bis 40 Atom% Kupfer und 60 bis 70 Atom% Zirkon zum Einsatz.

Besonders bevorzugte Legierungen sind $Cu_{70}Zr_{30}$, $Cu_{62}Zr_{38}$, $Cu_{35}Zr_{65}$.

Wichtige Voraussetzung ist, dass die verwendeten Legierungsbestandteile Kupfer und Zirkon für die Herstellung der amorphen Legierungen eine Reinheit von mindestens 99,5% aufweisen. Ausserdem dürfen keine oxidischen Verunreinigungen vorhanden sein.

Da die Löttemperaturen für diese Legierungen in einem Bereich von 900 bis 1100°C liegen, sind die entsprechenden Lötfolien in besonderer Weise zum Verbinden von Keramiken, bestehend aus Aluminiumoxiden, Zirkonoxiden, Magnesiumoxiden oder deren Mischungen, und zum Hartlöten von Keramiken der genannten Art mit den Metallen aus der Reihe, Titan, Zirkonium, Hafnium, Nickel, Eisen oder deren Legierungen geeignet.

Bevorzugt werden die erfindungsgemässen Kupfer-Zirkon-Lötfolien zum Verbinden von Keramiken aus Aluminiumoxid oder Zirkonoxid untereinander und von Aluminiumoxidkeramik mit Nickel eingesetzt.

Untersuchungen haben gezeigt, dass bei den erfindungsgemässen Legierungen das Zirkon den chemisch reaktiven Bestandteil der Lötverbindung darstellt, während das Kupfer den Passivanteil mit spannungsausgleichender Wirkung bildet.

Die Herstellung der erfindungsgemässen Lötfolien erfolgt durch Abschrecken der Schmelze der genannten Legierung mit einer Kühlrate von mindestens $10^5$°C/s. Dabei handelt es sich um Techniken, die in der Herstellung von glasartigen Metallen verbreitet sind. Zur Herstellung der erfindungsgemässen Folien wird zweckmässig das Schmelzspinnverfahren herangezogen, wo das schmelzflüssige Metall auf einem schnell rotierenden Kupferzylinder abgeschreckt und als Band/Folie abgezogen wird.

Unter diesen Bedingungen hergestellte Folien weisen glasartige oder amorphe Struktur und eine hohe Duktilität auf und sind in hohem Masse homogen.

Die Kupfer-Zirkonlegierungen der vorliegenden Erfindung müssen, um dem Einsatz als Lötfolie zu genügen, mindestens teilweise amorph sein.

Die Dicke der erfindungsgemässen Cu-Zr-Folien beträgt zweckmässig zwischen 20 und 120 μm, vorzugsweise zwischen 40 und 90 μm.

Beispiele

Durch Aufbringen einer Metallschmelze, der in den folgenden Beispielen angegebenen Zusammensetzung auf eine mit einer Umdrehungsgeschwindigkeit von 21 m/sec. sich bewegenden Kupfertrommel unter Helium als Schutzgas und einem Unterdruck von ca. 0,8 bar, wurden amorphe Bänder mit einer Dicke von 60 $\mu$m und einer Breite von 3,5 mm hergestellt.

Die folgende Tabelle zeigt die Zusammensetzung von erfindungsgemässen Lötfolien.

| Beispiel | Cu Atom% | Zr Atom% | Schmelzpt. °C |
|---|---|---|---|
| 1 | 70 | 30 | 1070 |
| 2 | 62 | 38 | 885 |
| 3 | 35 | 65 | 995 |

Beispiel 4

Zwei Aluminiumoxidkeramiktestkörper der Masse 2,5 cm x 2,5 cm x 0,6 cm wurden an den zu verbindenen Oberflächen mit Ethanol entfettet und gesäubert. Eine $Cu_{70}Zr_{30}$-Lötfolie einer Dicke von 60 $\mu$m wurde zwischen die zu verbindenden Flächen der Testkörper eingefügt. Der Lötvorgang wurde durchgeführt in einem induktiv beheizten Hochvakuumofen bei einem Druck von $10^{-5}$ mbar, einer Temperatur von 1000° C über eine Dauer von 20 min. Es wurde eine chemisch widerstandsfähige, sehr dauerhafte Lötverbindung erhalten.

Beispiel 5

a) Zwei $Al_2O_3$-Testkörper wurden entsprechend Beispiel 4 vorbereitet. Eine $Cu_{70}ZR_{30}$-Lötfolie wurde zwischen die zu verbindenden Flächen eingefügt. Der Lötvorgang wurde durchgeführt in einem induktiv beheizten Ofen bei 1000° C in einer Heliumatmosphäre über eine Dauer von 30 min. Es wurde eine chemisch widerstandsfähige, sehr dauerhafte Lötverbindung erhalten.
b) Anstelle von Helium als Schutzgas wurde mit Argon als Schutzgas eine weitere Lötung durchgeführt. Bezüglich der chemischen Widerstandsfähigkeit und Festigkeit wurden vergleichbare Resultate wie in den Beispielen 4 und 5a) erzielt.

Beispiel 6

Die zu verbindenden Oberflächen eines $Al_2O_3$-Keramiktestkörpers der Masse 2,5 cm x 2,5 cm x 0,6 cm und eines zylinderförmigen Nickeltestkörpers mit einem Durchmesser von 2 cm wurden mit Ethanol entfettet und gesäubert. Zwischen die Oberfläche wurde eine $Cu_{70}Zr_{30}$-Lötfolie einer Dicke von 60 $\mu$m eingefügt.
Die Lötung wurde erreicht in einem induktiv beheizten Hochvakuumofen bei einem Druck von $10^{-5}$ mbar, einer Temperatur von 1100° C über eine Dauer von 20 min.
Es wurde eine widerstandsfähige und dauerhafte Lötverbindung erhalten.

Beispiel 7

Die zu verbindenden Oberflächen eines $Al_2O_3$-Keramiktestkörpers der Masse 2,5 cm x 2,5 cm x 0,6 cm und eines zylinderförmigen Nickeltestkörpers mit einem Durchmesser von 2 cm wurden mit Ethanol entfettet und gesäubert. Zwischen die Oberfläche wurde eine $Cu_{62}Zr_{38}$-Lötfolie einer Dicke von 60 $\mu$m eingefügt.
Die Lötung wurde erreicht in einem induktiv beheizten Hochvakuumofen bei einem Druck von $10^{-5}$ mbar, einer Temperatur von 1000° C über eine Dauer von 20 min.

Es wurde eine widerstandsfähige und dauerhafte Lötverbindung erhalten.

**Ansprüche**

1. Homogene duktile Lötfolie mit einer Legierungszusammensetzung von 20 bis 80 Atom% Kupfer und 20 bis 80 Atom% Zirkon.

2. Lötfolie nach Patentanspruch 1 mit einer Legierungszusammensetzung von 65 bis 75 Atom% Kupfer und 25 bis 35 Atom% Zirkon.

3. Lötfolie nach Patentanspruch 1 mit einer Legierungszusammensetzung von 55 bis 65 Atom% Kupfer und 35 bis 45 Atom% Zirkon.

4. Lötfolie nach Patentanspruch 1 mit einer Legierungszusammensetzung von 30 bis 40 Atom% Kupfer und 60 bis 70 Atom% Zirkon.

5. Lötfolie nach einem der Patentansprüche 1 bis 4, dadurch gekennzeichnet, dass die Legierung eine mindestens teilweise amorphe Struktur besitzt.

6. Lötfolie nach einem der Patentansprüche 1 bis 5, dadurch gekennzeichnet, dass sie eine Dicke von 20 bis 120 μm aufweist.

7. Verwendung einer Lötfolie nach Patentanspruch 1 zum Hartlöten von Keramikteilen untereinander oder Keramikteilen mit Metallen.

8. Verwendung einer Lötfolie nach Patentanspruch 7 zum Hartlöten von Keramikteilen aus Aluminiumoxiden, Zirkonoxiden, Magnesiumoxiden oder deren Mischungen.

9. Verwendung einer Lötfolie nach Patentanspruch 7 zum Hartlöten von Keramikteilen aus Aluminiumoxiden, Zirkonoxiden, Magnesiumoxiden mit Metallen aus der Reihe Titan, Zirkonium, Hafnium, Nickel oder Eisen oder deren Legierungen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 038 584 (BBC)<br>* Ansprüche 1-5,12,13,20; Seite 12 *<br>--- | 1-9 | B 23 K 35/30<br>B 23 K 35/32<br>C 04 B 37/00<br>C 04 B 37/02 |
| X | PATENT ABSTRACTS OF JAPAN, Band 8, Nr. 246 (C-251)[1683], 10. November 1984; & JP-A-59 126 739 (IKUO OKAMOTO) 21-07-1984<br>* Zusammenfassung *<br>--- | 1-5 | |
| X | CHEMICAL ABSTRACTS, Band 101, Nr. 24, Dezember 1984, Seite 240, Zusammenfassung Nr. 215270c, Columbus, Ohio, US; & JP-A-59 128 279 (I. OKAMOTO et al.) 24-07-1984<br>* Zusammenfassung *<br>--- | 1-9 | |
| A | EP-A-0 185 954 (VACUUM SCHMELZE)<br>--- | | |
| A | FR-A-1 155 921 (THOMSON-HOUSTON)<br>----- | | |
| | | | **RECHERCHIERTE SACHGEBIETE (Int. Cl.5)**<br><br>B 23 K |

Der vorliegende Recherchenbericht wurde für alle Patentansprüche erstellt

| Recherchenort | Abschlußdatum der Recherche | Prüfer |
|---|---|---|
| DEN HAAG | 12-10-1989 | MOLLET G.H.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument